# EUROPEAN PATENT SPECIFICATION

(11) **EP 1 687 581 B1**
(45) Date of publication and mention of the grant of the patent: **28.09.2011**
(21) Application number: 04775538.4
(22) Date of filing: 13.10.2004
(51) Int. Cl.: F28F 9/00, F02B 29/04

(54) **COOLER DEVICE**
KÜHLVORRICHTUNG
DISPOSITIF DE REFROIDISSEMENT

(30) Priority: 30.10.2003 SE 0302870
(43) Date of publication of application: 09.08.2006
(73) Proprietor: Scania CV AB (publ), 151 87 Södertälje (SE)
(72) Inventor: Kardos, Zoltan, S-151 35 Södertälje (SE); Pettersson, Henrik, S-635 05 Eskilstuna (SE)
(86) International application number: PCT/SE2004/001457
(87) International publication number: WO 2005/043064

(56) References cited:
- US-A- 4 997 033
- US-A- 5 095 882
- US-A- 6 029 345
- US-B1- 6 318 454

## Description

### BACKGROUND TO THE INVENTION, AND STATE OF THE ART

The present invention relates to a cooler device according to the preamble of claim 1. Such a cooler device is known from US-A- 5 095 882.

Supercharged combustion engines may, for example, be used for powering heavy vehicles. A supercharged combustion engine may be a diesel engine or an Otto engine. A supercharged combustion engine usually comprises a turbine which is driven by exhaust gases from the combustion engine. The turbine itself drives a compressor which compresses the air in an inlet line to the combustion engine. In such cases, a charge air cooler is arranged in the inlet line to cool the compressed air before it reaches the combustion engine.

The compressed air is usually led from the compressor to an inlet connection of the charge air cooler via a flexible hose. After cooling in the charge air cooler, the cooled air is led out through an outlet connection of the charge air cooler to the combustion engine via another flexible hose. The flexible hoses leading the compressed air to and from the charge air cooler are not designed to absorb pressure forces from the air in the longitudinal direction of the hoses. The result is that the pressurised air exerts relatively large pressure forces on the inlet connection and outlet connection of the charge air cooler. A know practice in this respect is to provide the charge air cooler with force-absorbing fastenings which secure the charge air cooler to a stationary portion of the vehicle. The cooler element is thus held in a fixed position in the vehicle against the action of the pressure forces which arise from the compressed air. As the space in many vehicles is limited, it is often desirable to arrange the respective securings of the inlet connection and outlet connection to said hoses in different positions. In such positions, however, there is risk of the inlet connection and outlet connection being subject to pressure forces at a distance from the securings of the inlet connection and/or outlet connection to the cooler element. This results in the pressure forces exerting leverage which causes a twisting moment acting upon the inlet connection and/or outlet connection. In unfavourable circumstances there is risk of such a twisting moment twisting the inlet connection and/or outlet connection in such a way that the charge air cooler becomes deformed.

US-A-5 095 882 discloses a cooler element comprising an inlet connection an outlet connection and a reinforcing element between the inlet and outlet connections.

### SUMMARY OF THE INVENTION

The object of the present invention is to provide a cooler device of the kind mentioned in the introduction which is so designed that any twisting moment acting upon the inlet connection and/or outlet connection is reduced to a value such as to ensure that the connections do not become twisted and deform the cooler device.

This object is achieved with the cooler device of the kind mentioned in the introduction which is characterised by the features indicated in the characterising part of claim 1. The inlet connection and the outlet connection of the cooler element are usually already anchored by means of force-absorbing elements so that the cooler element can be held in a fixed position against the action of the pressure forces which are due to the pressure of the first medium. However, such force-absorbing elements have a relatively limited capacity for counteracting twisting moments acting upon the inlet connection and/or outlet connection. According to the present invention, a reinforcing element is applied in such a way as to extend between the inlet connection and the outlet connection which inlet connection and/or outlet connection comprise/s a curved portion and the reinforcing element has adjacent to said curved portion a securing to the inlet connection and/or outlet connection. In cases where the extent of the inlet connection is such that it is acted upon by a twisting moment, the reinforcing element will transfer part of the twisting moment to the outlet connection. The twisting moment acting upon the inlet connection will thus also be absorbed by the outlet connection. This means that the value of the twisting moment can be reduced to a level at which the risk of deformation of the inlet portion is substantially eliminated. By suitable positioning and shaping of inlet hoses and outlet hoses it is also possible, in favourable situations, to cause the twisting moments acting upon the inlet connection and outlet connection to counteract one another. Further reduction of the twisting load on the fastenings of the inlet connection and outlet connection in the cooler element is thus possible. Such a reinforcing element results in greater scope for any desired shape and positioning of the inlet connection and/or outlet connection than in the case of conventional inlet connections and outlet connections. Any such curved portion of the inlet connection and/or outlet connection usually serves as a point of action of the pressure forces. In such cases, the pressure forces may exert leverage on the inlet connection and/or outlet connection, thereby causing a twisting moment which tends to twist the inlet connection and/or outlet connection. Stabilising the curved portion by means of a securing to the reinforcing element effectively prevents the curved portion being displaced from its intended position. Twisting of the inlet connection and/or outlet connection is thus prevented.

According to a preferred embodiment of the present invention, the reinforcing element is a rigid element, resulting in the distance between the inlet connection and outlet connection being kept constant. In this case, considerable reduction of the action of any twisting moments to which the inlet connection or outlet connection is subject is also possible by suitable positioning of the respective securings between the reinforcing element and the inlet connection and outlet connection. The reinforcing element preferably has rigid securings to the inlet connection and outlet connection. Such rigid securings may take the form of the reinforcing element being provided with two fastenings, situated at a distance from one another, to both the inlet connection and outlet connection. Alternatively, the reinforcing element may be secured to the inlet connection and outlet connection by a suitable weld seam. Such securings provide assurance that the inlet connection and outlet connection are rigidly secured to one another and cannot be twisted relative to one another.

The inlet connection or outlet connection or both of them may each have a securing portion which is secured to the cooler element along at least part of the end surface of the cooler element. With advantage, the connections have their respective securing portions secured to opposite end portions of the cooler element. The cooler element may have one or more pipelines carrying the first medium between the end portions of the cooler element In such cases, a second medium, e.g. in the form of air, may flow past pipelines in the cooler element in order to cool the first medium.

According to another preferred embodiment of the present invention, the reinforcing element is adapted to providing a support surface for at least one further element. In a vehicle there is always a need to provide suitable support surfaces to support components of various kinds. An existing reinforcing element may be shaped in such a way as also to perform this function. In such cases the reinforcing element may provide support surfaces for pipelines of various kinds, support surfaces for fastening a recirculation shield, and support surfaces for fastening a water pump. The reinforcing element may comprise a first striplike portion extending between the inlet connection and the outlet connection, and a second striplike portion which is angled relative to the first striplike portion and is adapted to providing support surfaces for fastening said further component. Such a reinforcing element is easy to make from suitable sheetmetal material.

According to another preferred embodiment of the present invention, the first medium is gaseous. In particular, gaseous media at relatively high temperature may exert great pressure forces acting upon inlet hoses and outlet hoses of cooler devices. The cooler device may be a charge air cooler adapted to cooling compressed air being led to a supercharged combustion engine. The reinforcing element according to the present invention is primarily intended for fitting between the inlet connection and outlet connection of a charge air cooler. The reinforcing element may nevertheless be fitted between the inlet connection and outlet connection of any desired cooler device whose , inlet connection and outlet connection are acted upon by large pressure forces,

### BRIEF DESCRIPTION OF THE DRAWINGS

A preferred embodiment of the invention is described below by way of example with reference to the attached drawings, in which:
- Fig. 1: depicts schematically a supercharged combustion engine,
- Fig. 2: depicts a charge air cooler with a reinforcing element according to the present invention, as seen obliquely from in front,
- Fig. 3: depicts the charge air cooler of Fig. 2 after a number of components have been fitted to the reinforcing element, and
- Fig. 4: depicts the charge air cooler of Fig, 3 as seen obliquely from behind.

### DETAILED DESCRIPTION OF A PREFERRED EMBODIMENT OF THE INVENTION

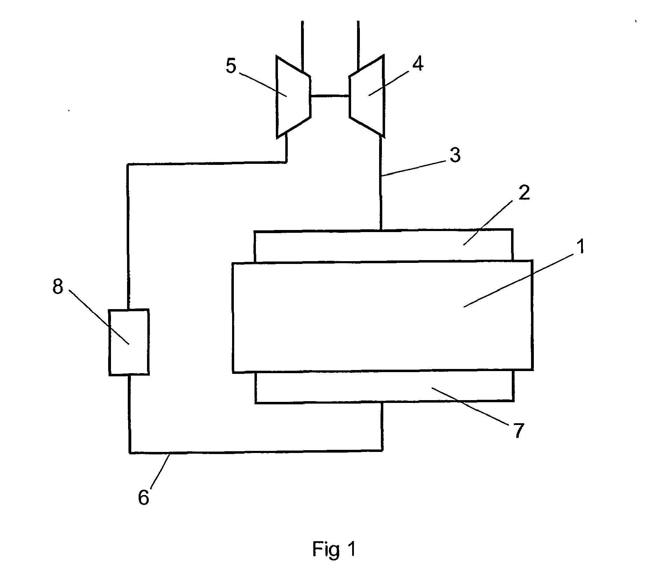

Fig. 1 depicts schematically a supercharged combustion engine 1 which may be a diesel engine or an Otto engine. The combustion engine 1 may be intended as the prime mover for a heavy vehicle. Exhaust gases from the respective cylinders of the combustion engine 1 are led via an exhaust manifold 2 to an exhaust line 3. The exhaust line 3 leads the exhaust gases, which are at higher than atmospheric pressure, through a turbine 4. The turbine 4 thus has a rotary motion imparted to it which is transmitted, via a linkage, to a compressor 5. The compressor 5 compresses air which is led through an inlet line 6 to the respective cylinders of the combustion engine 1 via a manifold 7. A charge air cooler 8 is arranged in the inlet line 6 to cool the compressed air before it is led into the combustion engine 1.

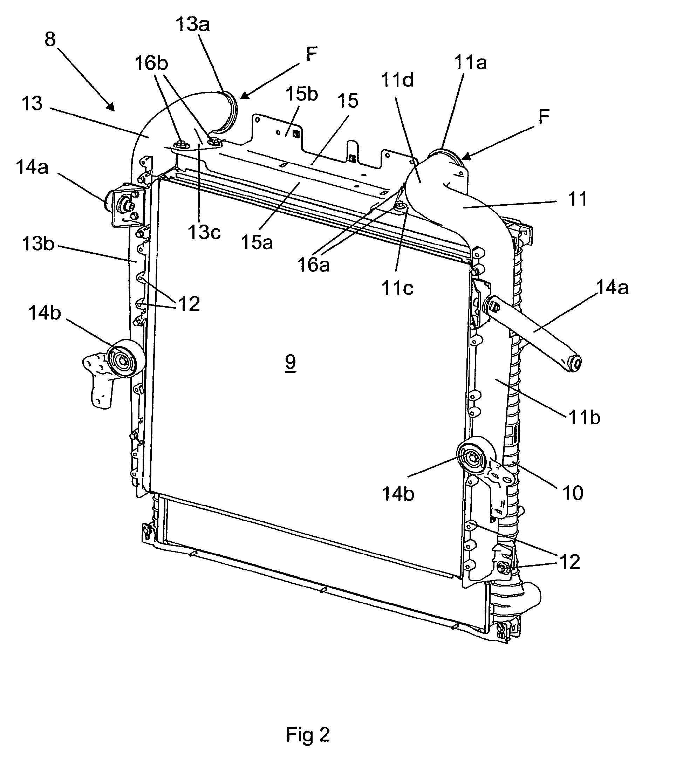

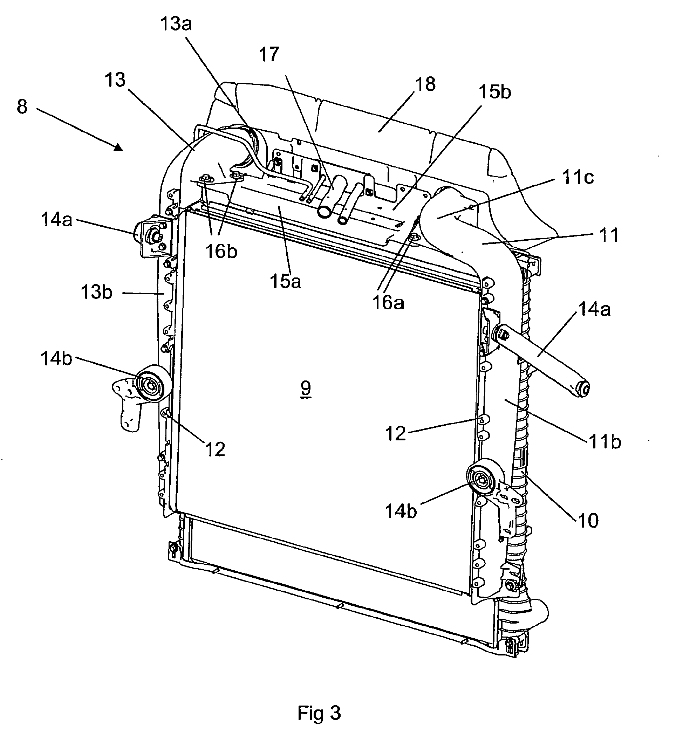

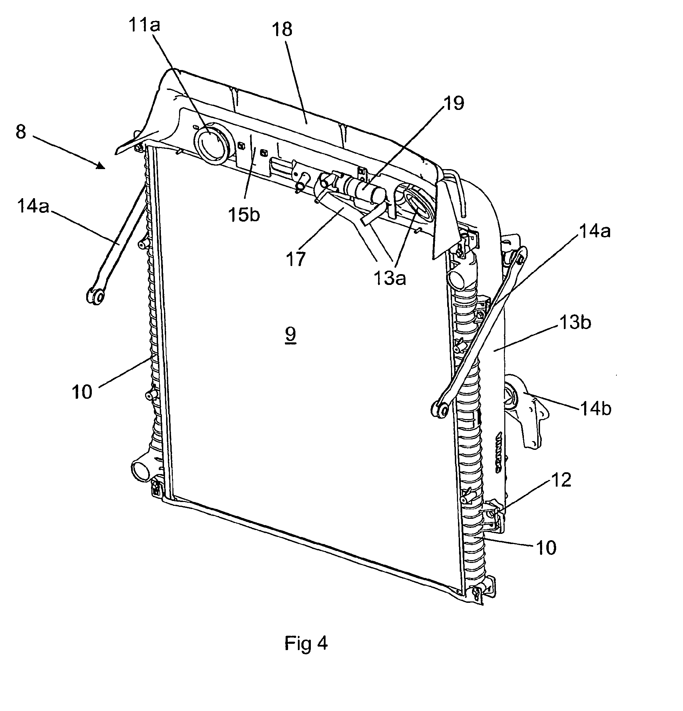

Figs. 2-4 depict a cooler device in the form of a charge air cooler 8. They depict the charge air cooler as seen from different angles, with and without components fitted. The charge air cooler 8 comprises a cooler element 9 with flanged pipelines 10 for carrying compressed air through the cooler element 9. A cooling air flow is adapted to being led past the pipelines 10 in the cooler element 9 by means of an undepicted cooler fan or a stream of air passing the moving vehicle. The air flow thus cools the compressed air which passes through the cooler element 9. The charge air cooler 8 comprises an inlet connection 11 leading the compressed air into the cooler element 9. The inlet connection 11 has an extent between a free end portion 11a which may be secured to an undepicted flexible hose leading the compressed air from the compressor 5, and a securing portion 11b which is firmly secured to an end portion of the cooler element 9. The securing portion is firmly secured to the cooler element 9 by means of a multiplicity of securing elements 12. The compressed air is led into the pipeline 10 via the securing portion 11b. The charge air cooler 8 also comprises an outlet connection 13 which leads the pressurised air out from the cooler element 9, The outlet connection 13 has an extent between a securing portion 13b which is firmly secured to a second end portion of the cooler element 9 by means of a multiplicity of securing elements 14, and a free end portion 13a which may be secured to an undepicted flexible hose leading the compressed air to the combustion engine 1.

The flexible hoses leading the compressed air to and from the charge air cooler 8 do not absorb any pressure forces from the air in the longitudinal direction of the hoses. This results in the compressed air exerting relatively large pressure forces at the inlet connection 11 and outlet connection 13 of the charge air cooler 8. Accordingly, the charge air cooler 8 is provided with force-absorbing fastenings 14a, b which secure the inlet connection 11 and outlet connection 13 respectively to stationary parts of the vehicle. The cooler element 9 is thus held in a fixed position in the vehicle against the action of the pure pressure forces F arising from the compressed air. In conventional charge air coolers, the inlet connection 11 and outlet connection 13 have an extent between the free end portions 11b, 13b and the securing portions 11a, 13a in a plane which is substantially parallel with the direction of action of the pressure forces F. However, space in vehicles is limited. In many cases it is therefore desirable to arrange the free end portion 11b of the inlet connection and the free end portion 13b of the outlet connection at positions other than in said plane. In Figs. 2-4 the free end portion 11b of the inlet connection is arranged at a laterally displaced position relative to such a plane. The outlet connection 13 has a conventional extent in such a plane, but the position adopted for the inlet connection 11 has the effect of causing the pressure force F to act upon the free end portion 11 b of the inlet connection at a distance from said plane and the securing portion 11b securing the inlet connection to the cooler element 9. In this case the pressure force F exerts leverage in such a way as to cause a twisting moment acting upon the inlet connection 11. In unfavourable situations, there is risk that such a twisting torque might twist the inlet connection 11 in such a way that the charge air cooler would become deformed.

To prevent such twisting, an elongate rigid reinforcing element 15 is arranged so as to secure the inlet connection 11 to the outlet connection 13. The reinforcing element 15 comprises a first striplike portion 15a extending between the inlet connection 11 and the outlet connection 13, and a second striplike portion 15b angled relative to the first striplike portion 15a. The inlet connection 11 comprises a planar fastening portion 11c which is fastened to a curved portion 11d of the inlet connection 11. The fastening portion 11c comprises two holes situated at a distance from one another. The outlet connection 13 likewise comprises a planar fastening portion 13c. The fastening portion 13c likewise comprises two holes situated at a distance from one another. The first striplike portion 15a has at each of its ends two correspondingly arranged holes. The first striplike portion 15a is firmly secured to the fastening portion 11c by bolts 16a applied in the aforesaid holes, and to the fastening portion 13c by two bolts 16b. The respective pairs of bolts 16a, b applied at a distance from one another in the respective ends of the first striplike portion 15a result in the inlet connection 11 and outlet connection 13 being rigidly secured to the reinforcing element 15, thereby ensuring that they cannot be twisted relative to one another. In this situation, the twisting moment acting upon the inlet connection 11 is partly transferred to the outlet connection 13 via the reinforcing element 15. The value of the twisting moment acting upon the inlet connection 11 is thus reduced in such a way as to ensure that there is no risk of the inlet connection 11 becoming twisted and thereby deforming the cooler element 9. The inlet connection 11 thus comprises a curved portion 11c. The curved portion 11c is the point of action of the pressure force F tending to twist the inlet connection 11. Securing the fastening element 15 to the curved portion 11c prevents the latter from being displaced and thereby prevents twisting of the inlet connection 11.

The second striplike portion 15b of the reinforcing element 15 is adapted to providing a support surface for a number of vehicle components. In a vehicle there is always a need to provide suitable support surfaces to support components of various kinds. The reinforcing element 15 is therefore shaped in such a way as to also perform this function. The reinforcing element 15 thus provides suitably shaped support surfaces for pipelines 17 of various kinds. In this case, the reinforcing element 15 also has support surfaces for fastening a recirculation shield 18 adapted to preventing recirculation of air which has passed through the cooler element 9, and support surfaces for fastening a water pump 19 for circulation of hot coolant to heat the interior of the vehicle.

The invention is in no way limited to the embodiment depicted in the drawings but may be varied freely within the scopes of the claims. The cooler device is applicable not only to charge air coolers but also to other types of coolers for cooling a pressurised medium. In the embodiment described above, the inlet connection has an extent such that it is subject to a twisting moment. Alternatively, the extent of the outlet connection may be such that it is subject to a twisting moment. Finally, the extent of both the inlet connection and the outlet connection may be such that they are both subject to a twisting moment. In such a case, it is advantageous that the respective extents of the inlet connection and the outlet connection be such that the twisting moments occurring counteract one another. The reinforcing element 15 is not limited to providing support surfaces for the components exemplified above but may provide support surfaces for substantially any desired components.

## Claims

1. A cooler device which comprises a cooler element (9) whereby a first medium at higher than atmospheric pressure is adapted to being cooled by a second medium, a substantially rigid inlet connection (11) adapted to leading the first medium into the cooler element (9), which inlet connection (11) has an extent between a free end portion (11a) and a securing portion (11b) which is firmly secured to the cooler element (9), and a substantially rigid outlet connection (13) adapted to leading the first medium out from the cooler element (9), which outlet connection (13) has an extent between a securing portion (13b) which is firmly secured to the cooler element (9) and a free end portion (13b), the cooler device comprises a reinforcing element (15) which has a first securing (16a) to the inlet connection (11) in a region situated at a distance from the securing portion (11b) of the inlet connection, and a second securing (16b) to the outlet connection (13) in a region situated at a distance from the securing portion (13b) of the outlet connection, **characterised in that** the inlet connection (11) or outlet connection (13) or both of them comprise/s a curved portion (11d) and that the reinforcing element (15) has a securing to the inlet connection (11) and/or outlet connection (13) in association with said curved portion (11c).

2. A cooler device according to claim 1, **characterised in that** the reinforcing element (15) is a rigid element.

3. A cooler device according to claim 1 or 2, **characterised in that** the reinforcing element (15) has rigid securings (16a, b) to the inlet connection (11) and to the outlet connection (13).

4. A cooler device according to claim 3, **characterised in that** said rigid securings comprise bolts (16a, b) fitted at a distance from one another.

5. A cooler device according to any one of the foregoing claims, **characterised in that** the inlet connection (11) and outlet connection (13) or both of them has/have a securing portion (11b, 13b) secured to the cooler element (9) along at least part of an end surface of the cooler element (9).

6. A cooler device according to any one of the foregoing claims, **characterised in that** the reinforcing element (15) is adapted to providing a support surface for at least one further component (17-19).

7. A cooler device according to claim 6, **characterised in that** the reinforcing element (15) comprises a first striplike portion (15a) extending between the inlet connection (11) and outlet connection (13), and a second striplike portion (ISb) angled relative to the first striplike portion (15a), which second striplike portion (15b) is adapted to providing support surfaces for fastening said further components (17-19)

8. A cooler device according to any one of the foregoing claims, **characterised in that** the first medium is gaseous.

9. A cooler device according to any one of the foregoing claims, **characterised in that** the cooler device is a charge air cooler (8) adapted to cooling compressed air being led to a supercharged combustion engine (1).

## Patentansprüche

1. Kühlvorrichtung, die ein Kühlelement (9) umfasst, wobei ein erstes Medium bei einem höheren Druck als dem Atmosphärendruck dazu geeignet ist, um durch ein zweites Medium gekühlt zu werden, wobei ein im Wesentlichen starrer Zulaufanschluss (11) dazu geeignet ist, um das erste Medium in das Kühlelement (9) zu leiten, wobei sich der Zulaufanschluss (11) zwischen einem freien Endabschnitt (11a) und einem Befestigungsabschnitt (11b), der fest mit dem Kühlelement (9) verbunden ist, erstreckt und wobei ein im Wesentlichen starrer Ablaufanschluss (13) dazu geeignet ist, um das erste Medium aus dem Kühlelement (9) zu leiten, wobei sich der Ablaufanschluss (13) zwischen einem Befestigungsabschnitt (13b), der fest mit dem Kühlelement (9) verbunden ist, und einem freien Endabschnitt (13b) erstreckt, wobei die Kühlvorrichtung ein Verstärkungselement (15) aufweist, welches umfasst: eine erste Befestigung (16a) an dem Zulaufanschluss (11) in einem Bereich, der sich in einem Abstand zu dem Befestigungsabschnitt (11b) des Zulaufanschlusses befindet, und eine zweite Befestigung (16b) an dem Ablaufanschluss (13) in einem Bereich, der sich im Abstand zu dem Befestigungsabschnitt (13b) des Ablaufanschlusses befindet, **dadurch gekennzeichnet, dass** der Zulaufanschluss (11) oder der Ablaufanschluss (13) oder alle beide einen gekrümmten Abschnitt (11d) umfasst bzw. umfassen und dass das Verstärkungselement (15) eine Befestigung an dem Zulaufanschluss (11) und/oder an dem Ablaufanschluss (13) in Verbindung mit dem gekrümmten Abschnitt (11c) aufweist.

2. Kühlvorrichtung nach Anspruch 1, **dadurch gekennzeichnet, dass** das Verstärkungselement (15) ein starres Element ist.

3. Kühlvorrichtung nach Anspruch 1 oder 2, **dadurch gekennzeichnet, dass** das Verstärkungselement (15) starre Befestigungen (16a, b) an dem Zulaufanschluss (11) und an dem Ablaufanschluss (13) aufweist.

4. Kühlvorrichtung nach Anspruch 3, **dadurch gekennzeichnet, dass** die starren Befestigungen Schrauben (16a, b) umfassen, die in einem Abstand zueinander angebracht sind.

5. Kühlvorrichtung nach einem der vorangehenden Ansprüche, **dadurch gekennzeichnet, dass** der Zulaufanschluss (11) oder der Ablaufanschluss (13) oder alle beide einen Befestigungsabschnitt (11b, 13b) aufweist bzw. aufweisen, die mit dem Kühlelement (9) entlang zumindest eines Teils einer Stirnfläche des Kühlelements (9) befestigt sind.

6. Kühlvorrichtung nach einem der vorangehenden Ansprüche, **dadurch gekennzeichnet, dass** das Verstärkungselement (15) dazu geeignet ist, um eine Abstützfläche für zumindest ein weiteres Element (17 - 19) bereitzustellen.

7. Kühlvorrichtung nach Anspruch 6, **dadurch gekennzeichnet, dass** das Verstärkungselement (15) umfasst: einen ersten bahnförmigen Abschnitt (15a), welcher sich zwischen dem Zulaufanschluss (11) und dem Ablaufanschluss (13) erstreckt und einen zweiten bahnförmigen Abschnitt (15b), der relativ zu dem ersten bahnförmigen Abschnitt (15a) angewinkelt ist, wobei der zweite bahnförmige Abschnitt (15b) dazu geeignet ist, um Abstützflächen zum Befestigen der weiteren Elemente (17 - 19) bereitzustellen.

8. Kühlvorrichtung nach einem der vorangehenden Ansprüche, **dadurch gekennzeichnet, dass** das erste Medium gasförmig ist.

9. Kühlvorrichtung nach einem der vorangehenden Ansprüche, **dadurch gekennzeichnet, dass** die Kühlvorrichtung ein Ladeluftkühler (8) ist, der dazu geeignet ist, um komprimierte Luft zu kühlen, die zu einem aufgeladenen Verbrennungsmotor (1) geführt wird.

## Revendications

1. Dispositif de refroidissement, comprenant un élément de refroidissement (9), dans lequel un premier milieu à une pression supérieure à la pression atmosphérique est destiné à être refroidi par un second milieu, un raccord d'admission (11) sensiblement rigide conçu pour acheminer le premier milieu dans l'élément de refroidissement (9), lequel raccord d'admission (11) s'étend entre une partie d'extrémité libre (11a) et une partie de fixation (11b) qui est solidement fixée à l'élément de refroidissement (9), et un raccord de sortie (13) sensiblement rigide, conçu pour acheminer le premier milieu hors de l'élément de refroidissement (9), lequel raccord de sortie (13) s'étend entre une partie de fixation (13b) solidement fixée à l'élément de refroidissement (9) et une partie d'extrémité libre (13b), le dispositif de refroidissement comprenant un élément de renfort (15) qui présente une première fixation (16a) au raccord d'admission (11) dans une région située à distance de la partie de fixation (11b) du raccord d'admission, et une seconde fixation (16b) au raccord de sortie (13) dans une région située à distance de la partie de fixation (13b) du raccord de sortie, **caractérisé en ce que** le raccord d'admission (11) ou le raccord de sortie (13) ou les deux comprend/comprennent une partie incurvée (11d) et **en ce que** l'élément de renfort (15) comporte une fixation au raccord d'admission (11) et/ou au raccord de sortie (13) en association avec ladite partie incurvée (11c).

2. Dispositif de refroidissement selon la revendication 1, **caractérisé en ce que** l'élément de renfort (15) est un élément rigide.

3. Dispositif de refroidissement selon la revendication 1 ou 2, **caractérisé en ce que** l'élément de renfort (15) comporte des fixations rigides (16a, b) au raccord d'admission (11) et au raccord de sortie (13).

4. Dispositif de refroidissement selon la revendication 3, **caractérisé en ce que** lesdites fixations rigides comprennent des boulons (16a, b) fixés à distance l'un de l'autre.

5. Dispositif de refroidissement selon l'une quelconque des revendications précédentes, **caractérisé en ce que** le raccord d'admission (11) et le raccord de sortie (13) ou les deux présente/ent une partie de fixation (11b, 13b) fixée à l'élément de refroidissement (9) le long d'au moins une partie d'une surface d'extrémité de l'élément de refroidissement (9).

6. Dispositif de refroidissement selon l'une quelconque des revendications précédentes, **caractérisé en ce que** l'élément de renfort (15) est destiné à fournir une surface de support à au moins un autre composant (17-19).

7. Dispositif de refroidissement selon la revendication 6, **caractérisé en ce que** l'élément de renfort (15) comprend une première partie de type bande (15a) s'étendant entre le raccord d'admission (11) et le raccord de sortie (13), et une seconde partie de type bande (15b) étant coudée par rapport à la première partie de type bande (15a), laquelle seconde partie de type bande (15b) est conçue pour fournir des surfaces de support pour la fixation desdits autres composants (17-19).

8. Dispositif de refroidissement selon l'une quelconque des revendications précédentes, **caractérisé en ce que** le premier milieu est gazeux.

9. Dispositif de refroidissement selon l'une quelconque des revendications précédentes, **caractérisé en ce que** le dispositif de refroidissement est un refroidisseur d'air de suralimentation (8) conçu pour refroidir de l'air comprimé acheminé à un moteur à combustion suralimenté (1).
